# EUROPEAN PATENT APPLICATION

(11) **EP 1 282 223 A2**
(43) Date of publication of application: **05.02.2003**
(21) Application number: 02017041.1
(22) Date of filing: 27.07.2002
(51) Int. Cl.: H02M 7/5387

(54) **Device for producing or controlling an alternating current in at least one inductive load**

(30) Priority: 04.08.2001 DE 10138502; 15.03.2002 EP 02005962
(71) Applicant: NexPress Solutions LLC, Rochester, New York 14653-7001 (US)
(72) Inventor: Schmidt, Ulrich, 24211 Preetz (DE); Zessin, Jörg, 24326 Ascheberg (DE)
(74) Representative: Lauerwald, Jörg

(57) **Abstract**

The invention relates to a device for producing an alternating current with a direct current source in at least one inductive load, in particular for driving a step motor, preferably in microsteps.

The invention also relates to a device for controlling an alternating current in at least one inductive load, preferably for a device of the above-mentioned type.

The task of the invention is to provide devices of the above-mentioned type, which make it possible to take into consideration the targeted operating conditions in a cost-effective and reliable manner.

This task is solved according to the invention by means of a loop and an actuator for the loop, which contains a device for complex programmable logic (CPLD; complex programmable logic device).

An independent solution of the task at hand is distinguished by a loop and an actuator, which is parameterized or can be parameterized by applying a (universal) logic description by means of parameter constants.

## Description

### FIELD OF THE INVENTION

The invention relates to a device for producing an alternating current with a direct current source in at least one inductive load, in particular for driving a step motor, preferably in microsteps.

The invention also relates to a device for controlling a direct current in at least one inductive load, preferably for a device of the type described above.

### BACKGROUND OF THE INVENTION

Devices of the types mentioned in the beginning are sufficiently known.

An important range of application for devices of this type is, for example, in digital, particularly electrophotographically operating printing presses. Several step motors with different functions can be found in such a printing press. These step motors must in part provide vastly different torques for their respective functions, such as a torque of approximately 0.15 N m, or a torque of approximately 3.8 N m, depending on their application. Step motors with these types of different torques must be controlled differently, because, for example, with a control of pulse-width modulation (PWM), a high basic frequency is required for the PWM, since at least one PWM pulse must be produced for each microstep, while high inductances, like those that occur during a high torque, operate against the current, meaning that a low frequency is required when such a motor is operating.

In principle, there are two different methodical approaches to the driving of step motors, each with a special step motor with specific functions, i.e., based on either software or hardware.

Software solutions are relatively slow and they have a great deal of difficult complying with the safety requirements in the area concerned.

Hardware solutions based on specific IC's are subject to the prescribed specifications of the manufacturer, so that they are necessarily specified and parameterized for the respective application.

Both types of solutions are costly, especially since, as mentioned, even in a single printing press, for example, numerous step motors with different special functions can be found.

### SUMMARY OF THE INVENTION

The task of the invention is to provide devices of the type mentioned in the beginning, which make it possible to take into account the targeted operating conditions in a cost-effective and reliable manner.

According to the invention, this task is solved by a control loop and an actuator for the control loop, which contains a device for a complex programmable logic (CPLD; complex programmable logic device).

This makes it possible to advantageously provide a flexible adjustment of the control device to the load to be operated and to the function of the load without changing the circuit in which the IC is implemented, by simple reprogramming the logic. The invention thus combines the advantages of software and hardware in a certain manner and prevents their disadvantages at the same time. In particular, the logic, once programmed, is as good as a hard-wired hardware and guarantees its operating reliability, but the logic is, on the other hand, simply reprogrammable for other operating conditions.

The solution according to the invention is also cost effective with respect to its purchase and maintenance, because, for example, in a single printing press the implemented step motors and the associated controls can be considerably standardized. This is made particularly clear by the independent solution of the before mentioned task, for which independent protection is also claimed, whereby a device according to the invention for the controlling of a direct current in at least one inductive load is characterized by a control loop and an actuator, which is parameterized or may be parameterized by use of a (universal) logic description with parametric constants. The logic description can also be universal in the sense that it is essentially standardized, and the control can simply be individualized and accordingly prepared for the respective function and condition only by feeding the respective parameter constants. Thus the invention already contains a spreading advantage in the parameterization itself, whereby characteristics of the respective special control are concentrated or manifested and reproduced in such parameters.

The control itself takes place preferably via a pulse-width modulation, as has already been mentioned, particularly for a two-phase control with microsteps.

The preferred parameters and parameterizations can be seen from the claims and permit an adaptation of the control to the requirements.

As has already been mentioned in the beginning, low frequencies are required with high inductances, although the pulse-width modulation itself requires a relatively high frequency. The basic frequency of the pulse-width modulation can thus preferably be set according to the invention by means of a parameter constant especially designated for this purpose, just called or labeled in form of an abbreviation as "f_chop_cnt (frequency chopping constant)".

When a high precision for the current in the inductance is required, the minimal on-period must be as short as possible. However, the characteristics of high inductances are inconsistent with a short minimal on-period. This minimal on-period can thus also be set preferably by a parameter constant, just called as "Min_on_cnt (Minimal on-period constant)". The minimal total break period can likewise preferably be set with a parameter constant, called "Min_off_cnt (Minimal off-period constant)".

The signal traveling time in the feedback path of the loop is not negligible with high frequencies, causing a time lag in the loop, which must be compensated for the operation of the PWM control at high frequencies. Thus, according to the invention, the time lag in the loop and/or the duration of the time lag can preferably and respectively be set via parameter constants, called "Comp_dis_del_cnt (Compensation disable delay constant)" and "Comp_dis_len_cnt (Compensation disable length constant)".

The device according to the invention controls, as an example or even better typically, the current in both motor windings of a 2-phase step motor. To this end, the necessary output signals for controlling an H-bridge driver are provided, so that either an integrated H-bridge, or for very high currents, a bridge consisting of discreet transistors with the corresponding driver can be used.

The invention, and its objects and advantages, will become more apparent in the detailed description of the preferred embodiment presented below.

### BRIEF DESCRIPTION OF THE DRAWINGS

Embodiments that also provide further inventive characteristics, to which the scope of the invention is, however, not limited, are shown in the drawings. The following are schematically illustrated:
Fig. 1 A block diagram of a motor-driving circuit for a 2-phase step motor;
Fig. 2 An actuator of a motor-driving circuit according to the invention represented in Fig. 1 as a block diagram;
Fig. 3 A device for timing of the actuator represented in Fig. 1 as a block diagram;
Fig. 4 A device for the pulse-width modulation of the actuator represented in Fig. 2 as a block diagram;
Fig. 5 A phase pattern generator of an actuator represented in Fig 2 as a block diagram; and
Fig. 6 A short-circuit detector of an actuator represented in Fig. 2 as a block diagram.

### DETAILED DESCRIPTION OF THE INVENTION

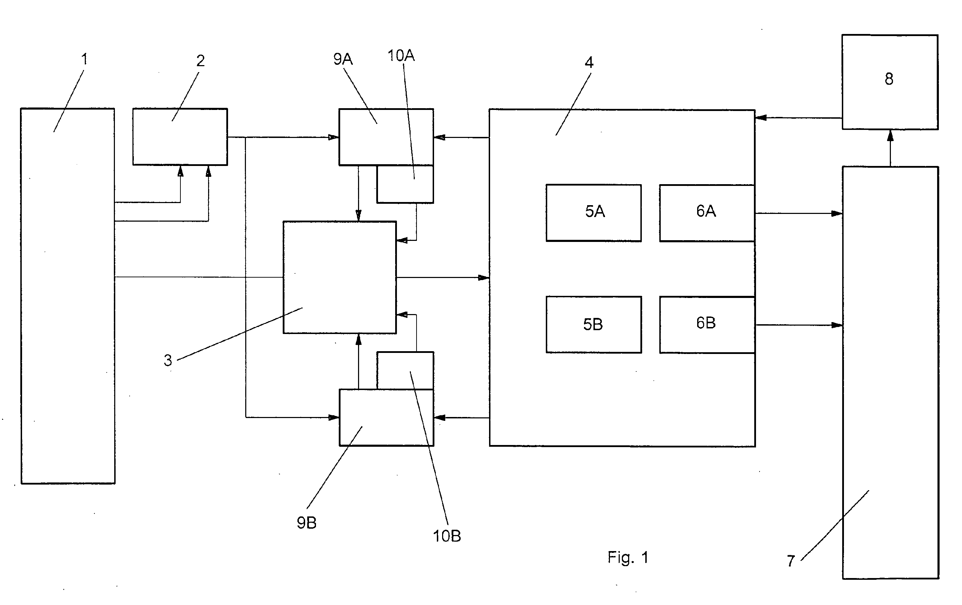

Fig. 1 shows a block diagram of a motor-driving circuit for a 2-phase step motor. The schematically illustrated circuit controls the current of both the motor windings of a 2-phase step motor.

The motor-driving circuit has an input interface 1. This is connected with a reference memory 2, in which the input interface 1 stores addresses and other data, and with a motor control device 3, which contains in particular the complex programmable logic device according to the invention.

To the motor controlling device 3 is attached the actual motor driver 4, which contains an H-bridge driver 5A and 5B and H-bridges 6A and 6B for driving both phase 1 and phase 2 or A and B of a step motor. With its output signals, the motor driver 4 controls the step motor, which is not shown in greater detail, via an output interface 7, which emits signals to a power supply device 8 for the step motor.

For its part, the power supply device 8 is also directly connected with the motor driver 4. The motor driver 4 is in turn connected via feedback elements 9A and 9B and via short circuit branches 10A and 10B to the motor controlling device, as a result of which corresponding control loops are formed.

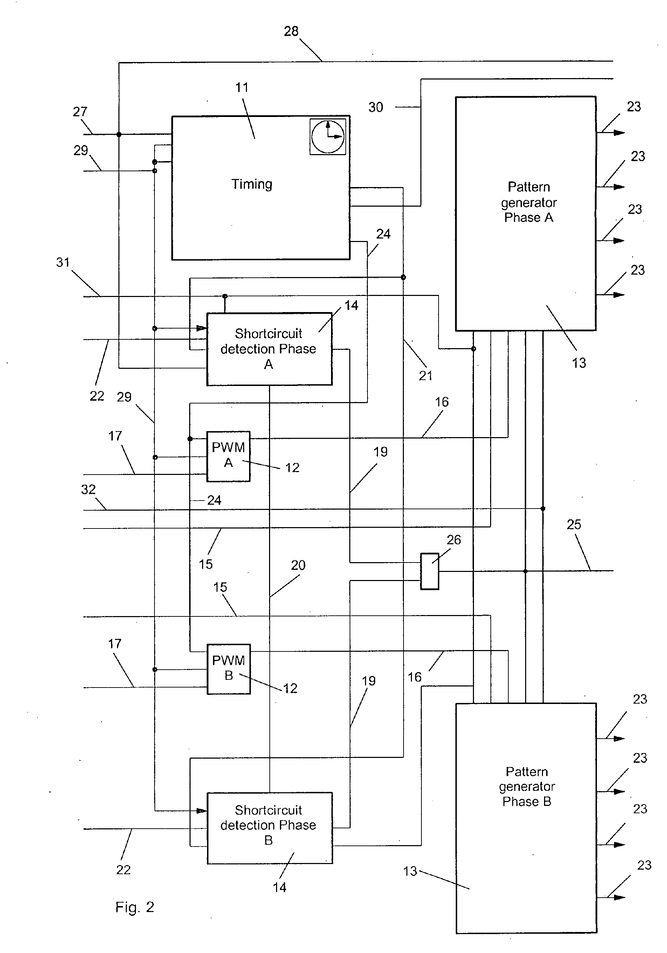

Fig. 2 is basically self-explanatory with the help of the abbreviations used and (English) words, and the same also applies to the following figures. Consequently, only a few of the illustrated elements are discussed below. Additional conditions can be deduced from the figures.

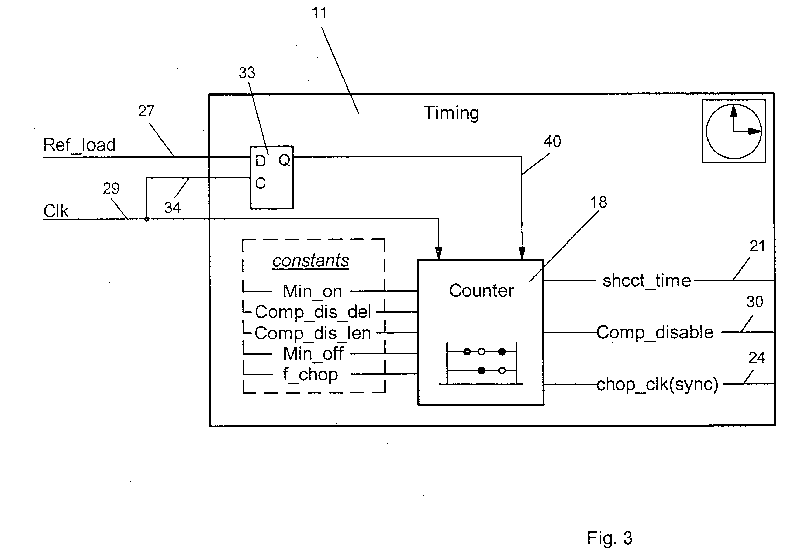

Fig. 2 basically explains the function of a programmable logic device used as an actuator of a control loop for controlling a 2-phase step motor. For this purpose, this actuator contains in particular a timing block 11, pulse-width modulators (PWM) 12 for the respective phases A and B, phase pattern generators 13 for phase A and B and short-circuit detectors 14 for phases A and B. These blocks 11 through 14 are also represented as block diagrams in the following Figures 3 through 6, but with somewhat greater detail of their content.

The driving signals 23 for the motor windings of the step motor are finally provided by the respective phase pattern generator 13. For this reason, the respective actual phase signal of the phase 1 or 2 and A or B is first input via lines 15 in the respective phase pattern generator 13. However, modulation signals from the respective pulse-width modulators 12 are also input via lines 16 in the respective phase pattern generator 13. However, the pulse-width modulators 12 are located in a respective control loop and receive signals from the feedback elements 9A and 9B via lines 17. Furthermore, the pulse-width modulators 12 are also connected to the timing block 11 via lines 24, which controls them with its time signals and thus the pulse-width modulation decidedly influences and predetermines the respective requirements, conditions and functions of the respective step motor.

It can be deduced from Fig. 2 that the short-circuit loops are available via short-circuit detectors 14 for phase A and B. The short-circuit detectors 14 are linked together by a short-circuit conductor 19, which are summarized to one line 25 via a junction 26, and short-circuit detectors 14 are connected together via a line 20. They are also connected with the timing block 11 via a line 21. They are arranged via lines 22 on the input side in the short-circuit branches 10A and 10B.

There are further lines, which can be seen from Fig. 2, i.e. line 27 for a reference-load signal "ref_load", a line 28 for a signal "load DAC", a line 29 for a clock signal "clk", a line 30 for a signal "Comp disable", explained with Fig. 3, a line 31 for an enabling signal "ena" and a line 32 for a signal "Power on reset".

As can be seen in Fig. 3, in which the timing block 11 is illustrated in greater detail, the timing block 11 comprises a counter 18 for its time signal, which can be programmed for the respective application according to the invention by the parameter constants input in the timing block 11, abbreviated now as "Min_on", "Comp_dis_del", "Comp_dis_len", "Min_off" and "f_chop", but being the same constants as mentioned before with their whole names. The counter 18 is directly feeded with a clock signal "clk" via the line 29. A reference-load signal "Ref_load" is conducted in the Counter 18 via the line 27 and via a D-flip flop 33 (the D-input of the D-flip flop 33), whereby the clock signal "clk" is transmitted to a clear- or preset-input of the D-flip flop 33 via line 34 and the output-signal of the flip flop 33 is conducted from the output Q via a line 40 to an input of the counter 18. The output signals of the timing block 11 are the output signals of the Counter 18 and these are a short circuit time signal "shcct_time" on line 21, the Compensation disable signal "Comp_disable" on line 30, which compensates the idle time by using the Compensation disable delay constant "Comp_dis_del(-cnt)" and the Compensation disable length constant "Comp_dis_len(-cnt)", and a chopped clock signal (syncronized) "chop_clk(sync)" on line 24. The further conducting of these output signals can be seen from and has been explained with Fig. 2.

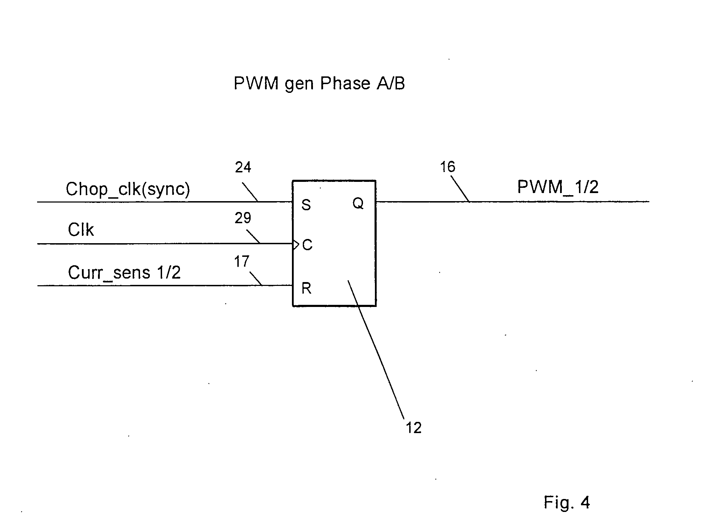

The Figures 4 through 6 show a pulse-width modulator 12, a phase model generator 13 and a short-circuit detector 14 in greater detail and they are, as mentioned, self-explanatory for further details, if or as far as not expressively explained in the following.

The Figure 4 shows a pulse-width modulator "PWM" 12 which generates the pulses "PWM_1/2" or signals for phases A and B for an input in the Pattern generator Phase A/B 13 via lines 16. The pulse-width modulators for Phases A and B are built equal. They are essentially consisting of a RS-flip flop (Set-reset flip flop) in the box 12. The RS-flip flop receives in its input S via line 24 the "Chop_clk(sync)" signal from the counter 18, in its clear- or preset-input C via line 29 a clock signal "clk" and in its input R signals "Curr_sens ½" from the feedback elements 9A and 9B via lines 17. The flip flop has an output Q.

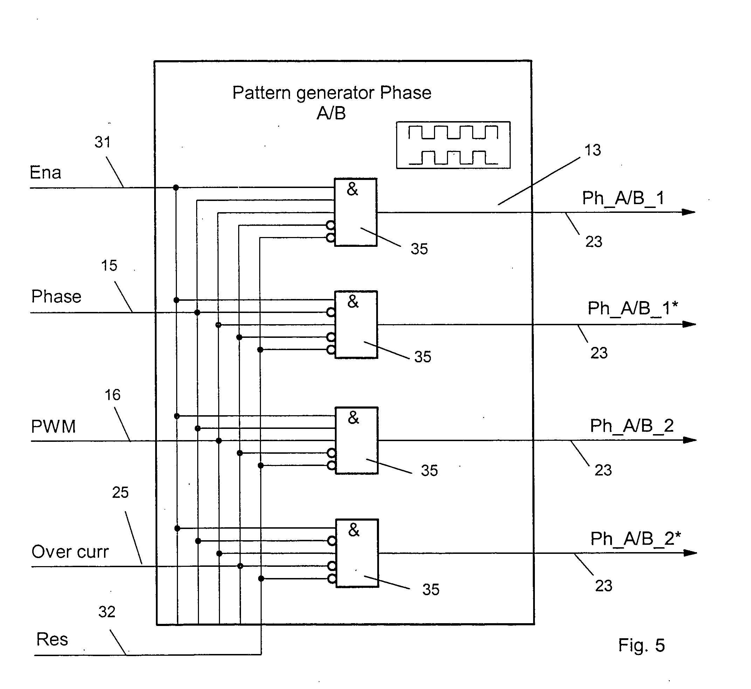

The Figure 5 shows a Pattern generator Phase A/B 13, comprising four NAND-elements 35 with the phase signals "Ph_A/B_1", "Ph_A/B_1*","Ph_A/B_2"and"Ph_A/B_2*" as their output-signals for controlling the 2-phase step motor via lines 23. The input-signals for the four NAND-elements 35 are the enable signal "Ena" via line 31, a phase signal via line 15, the output-signal "PWM" from a pulse-width modulator 12 via line 16, an over current signal "Over curr" via line 25 and a reset signal "Res" via line 32, which can also seen from Figure 2.

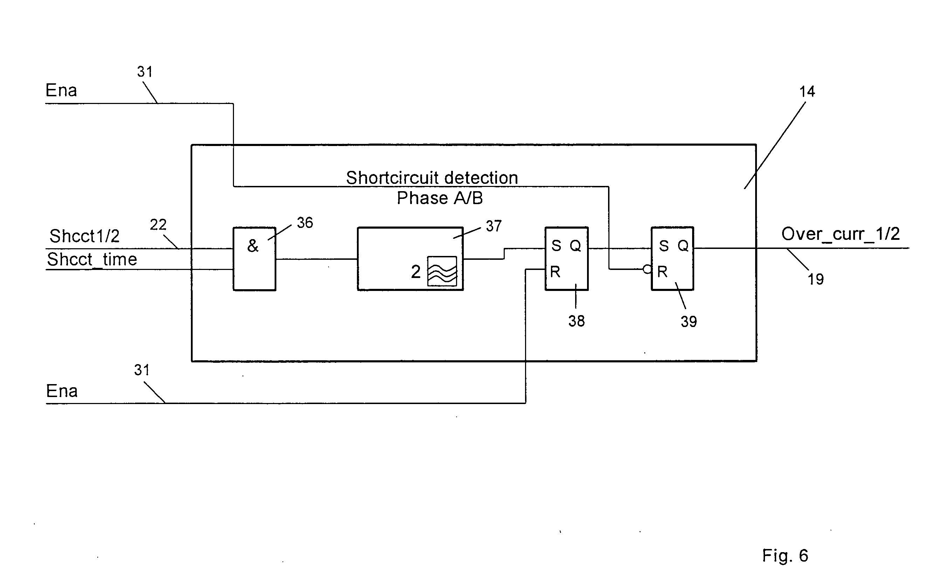

The Figure 6 shows a short-cut detector14, comprising an AND-element 36, a filter 37 and two RS-flip flops 38, 39 (with inputs S and R and outputs Q). The output-signal is a "Over_curr_1/2"-signal on a line 19. As input signals the short-cut detector 14 receives a short-cut signal "Shcct ½" via line 22, enable signals "Ena" via line 31 and a short-cut time signal "Shcct_time" via line 29 (resp. via line 20).

The invention has been described in detail with particular reference to certain preferred embodiments thereof, but it will be understood that variations and modifications can be effected within the spirit and scope of the invention.

## Claims

1. Device for producing an alternating current with a direct current source in at least one inductive load, in particular for driving a step motor, preferably in microsteps, **characterized by** a control loop and an actuator for the control loop, which contains a device for a complex programmable logic (CPLD; complex programmable logic device).

2. Device for controlling the current in at least one inductive load, preferably for a device according to Claim 1, **characterized by** a control loop and an actuator, which can be parameterized by a use of a (universal) logic description by means of parameter constants.

3. Device according to Claim 1 or 2, **characterized by** a device for pulse-width modulation (PWM) (12) of a control signal.

4. Device according to Claim 2 and 3, **characterized by** a parameter constant (f_chop_cnt) for setting the basic frequency of the pulse-duration modulation.

5. Device according to Claim 2 and 3, **characterized by** a parameter constant (Min_on_cnt) for setting the minimal on-period.

6. Device according to Claim 2 and 3, **characterized by** a parameter constant (Min_off_cnt) for setting the minimal total break period.

7. Device according to Claim 2 and 3, **characterized by** a parameter constant (Comp_dis_del_cnt) for setting the delay of the idle time in the control loop.

8. Device according to Claim 2 and 3, **characterized by** a parameter constant (Comp_dis_len_cnt) for setting the length (duration) of the idle time in the control loop.

9. Device according to one of the preceding claims, **characterized by** an H-bridge driver (5A, 5B) with at least one H-bridge (6A, 6B).

10. Device according to one of the Claims 1 through 8, **characterized by** discreet transistors with a corresponding driver.
